# EUROPEAN PATENT SPECIFICATION

(11) **EP 1 552 126 B1**
(45) Date of publication and mention of the grant of the patent: **18.11.2009**
(21) Application number: 03797803.8
(22) Date of filing: 30.06.2003
(51) Int. Cl.: F02D 41/04, F02D 41/10, F02D 23/00

(54) **CONTROL SYSTEM FOR IMPROVED TRANSIENT RESPONSE IN A VARIABLE-GEOMETRY TURBOCHARGER**
STEUERSYSTEM FÜR VERBESSERTES EINSCHWINGVERHALTEN IN EINEM TURBOLADER MIT VARIABLER GEOMETRIE
SYSTEME DE COMMANDE POUR REGIME TRANSITOIRE AMELIORE DANS UN TURBOCOMPRESSEUR A GEOMETRIE VARIABLE

(30) Priority: 28.06.2002 US 392923 P
(43) Date of publication of application: 13.07.2005
(73) Proprietor: Honeywell International Inc., Morristown NJ 07960 (US)
(72) Inventor: AHMAD, Samir, S., Rancho Palos Verdes, CA 90275 (US)
(74) Representative: Haley, Stephen
(86) International application number: PCT/US2003/020800
(87) International publication number: WO 2004/027238

(56) References cited:
- EP-A- 0 786 589
- US-A- 5 121 604
- US-A- 5 680 763

## Description

### FIELD OF THE INVENTION

This invention relates generally to the field of turbocharger control systems and, more particularly, to a system and method for improving transient response times of a variable-geometry turbocharger.

### BACKGROUND OF THE INVENTION

Turbochargers are required to operate over a wide range of engine speeds and loads. Systems have been developed to precisely control the boost provided by the turbocharger by controlling the exhaust gas provided to the turbine of the turbocharger. In general, a control mechanism for controlling the amount of boost provided by a turbocharger includes some type of variable-geometry mechanism that effectively varies the geometry of the turbine inlet nozzle. Such mechanisms can include, for example, multiple movable aerodynamic vanes in the nozzle, or pistons with or without vanes comprising one wall of the nozzle which are axially movable with respect to a fixed nozzle wall. Control of these mechanisms varies depending on application and can include pneumatic, electromechanical, hydraulic, and electro-hydraulic actuation systems. Control of the actuation system can be open-loop or closed-loop or a combination of open- and closed-loop.

The control of a turbocharger is complicated by the inherent lag in the engine exhaust system and the transient response times of the mechanical elements of the variable-geometry mechanism.

A variable-geometry turbocharger (VGT) such as that disclosed in U.S. Patent No. 6,269,642 uses vanes to guide the airflow in the turbine nozzle and to adjust the flow area of the nozzle to reduce turbo-lag and improve the acceleration of the engine. The VGT employs an electro-hydraulic actuation system that uses an electrical control signal to activate a spool valve that controls the flow of engine oil into and out of an actuator piston cylinder. The actuator force produced for rotating the vanes is proportional to the pressure differential across the actuator piston cylinder. The dynamic response of the vanes is a function of the oil flow and oil pressure and will vary according to the operating conditions such as supply pressure, hydraulic fluid temperature, ambient temperature and valve loading, among other parameters. These effects are sufficient to slow the dynamic response of the turbocharger vanes. Many different methods are used to attain a faster dynamic response. Internal valve parameters (e.g., nozzle and orifice sizes, spring rate, spool diameter, spool displacements, etc.) may be adjusted to produce a faster response. These changes require additional design, testing, and cost for varying application requirements.

EP1031713A discloses a control method for a variable geometry turbocharger selectively operable in two strategies, dependent upon whether the results of calculations exceed a threshold indicating that the turbocharger is experiencing transient operation.

Similar control issues arise with wastegates and other variable-geometry devices in turbocharger applications.

It is therefore desirable to have a control system that improves the dynamic response of the variable-geometry mechanism in a turbocharger.

It is also desirable to have a control system that is applicable to existing variable-geometry mechanisms without modification of the existing components.

In a first aspect, the invention consists in a control system for controlling a variable-geometry mechanism in a turbocharger for an engine, comprising:
a logic arrangement structured and arranged to determine a first difference parameter as the difference between a desired control value representing a desired operating condition in which the turbocharger is to be operated and the previous desired control value and to produce a control signal output based on said first difference parameter, such that the control signal output has a first value when said first difference parameter is greater than a predetermined first threshold and has a second value different from the first value when said first difference parameter is not greater than the predetermined first threshold, and wherein the logic arrangement is structured and arranged to provide the first value as a pulse of predetermined amplitude and duration, and
characterised in that the logic arrangement is further structured and arranged to sample the desired control value and to sample the previous desired control value representing the desired control value determined in a previous sample period,
wherein the amplitude and duration of the pulse is a function of said first difference parameter.

In a second aspect, the invention consist in a method for controlling a variable-geometry mechanism in a turbocharger for an engine, comprising the steps of:
sampling a desired control value representing a desired operating condition in which the turbocharger is to be operated;
sampling a previous desired control value representing the desired control value determined in a previous sample period;
determining a first difference parameter as the difference between the desired control value and the previous desired control value; and
supplying a control signal output to an actuator for the variable-geometry mechanism based on said first difference parameter, such that the control signal output has a first value when said first difference parameter is greater than a predetermined first threshold and has a second value different from the first value when said first difference parameter is not greater than the predetermined first threshold, said first value being supplied in the form of a pulse of predetermined amplitude and duration, the amplitude and duration of the pulse being a function of said first difference parameter.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a schematic diagram of an embodiment of a control system employing the present invention for a closed-loop system;
FIG. 2 is a flow chart for the closed-loop control logic employed by the embodiment of the invention in FIG. 1;
FIG. 3 is a schematic diagram of an embodiment of a control system employing the present invention for an open-loop system;
FIG. 4 is a flow chart for the open-loop control logic employed by the embodiment of the invention in FIG. 3;
FIG. 5 is a diagram of the time varying pulse created by a control system employing the present invention for a positive differential value;
FIG. 6 is a diagram of the time varying pulse created by a control system employing the present invention for a negative differential value;
FIG. 7 is a graphical representation of the amplitude and duration values for the pulses of FIG. 5 and 6 calculated by the control system;
FIG. 8 is a plot of control signal and the resulting actuator displacement produced in a variable-geometry turbocharger as a function of time, for a full range of travel of the actuator, for both a normal control signal as well as a pulsed control signal in accordance with the invention; and
FIG. 9 is a plot of control signal and the resulting actuator displacement produced in a variable-geometry turbocharger as a function of time, for a small range of travel of the actuator, for both a normal control signal as well as a pulsed control signal in accordance with the invention.

### DETAILED DESCRIPTION OF THE INVENTION

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

The inventive control system includes a supervisor logic that monitors the change in the control signal that is provided for adjusting the variable-geometry mechanism. The supervisor logic selects between a normal control signal output and a rapid pulse response control signal output to adjust the variable-geometry mechanism. For large changes in the control signal above a predetermined threshold value, the supervisor logic selects the rapid pulse response control output providing a pulse of calculated amplitude and duration to initiate movement of the variable geometry nozzle. The pulse can comprise a virtual step change in the control signal to a value exceeding that of the normal control signal that would ordinarily be applied in the absence of the supervisor logic. The amplitude of the pulse is determined as a function of a difference parameter. The difference parameter can be the difference between a desired (i.e., normal) control signal value and a previous control signal value determined in a previous iteration of the control logic; alternatively, the difference parameter can be the difference between the desired control signal and an actual (measured or estimated) control signal. Whenever the change in the control signal is below the predetermined threshold, the supervisor logic supplies the normal control signal to adjust the variable-geometry mechanism.

The amplitude (or height) and the duration (or width) of the pulse can also be a function of ambient conditions in some embodiments of the invention. This can be advantageous, for example, to account for cold ambient temperature conditions and adjust the response of the valve accordingly.

One embodiment of the present invention is applicable for use on a variable nozzle turbocharger such as that defined in the previously referenced U.S. Patent 6,269,642 entitled VARIABLE GEOMETRY TURBOCHARGER having a common assignee with the present application, the disclosure of which is incorporated by reference herein.

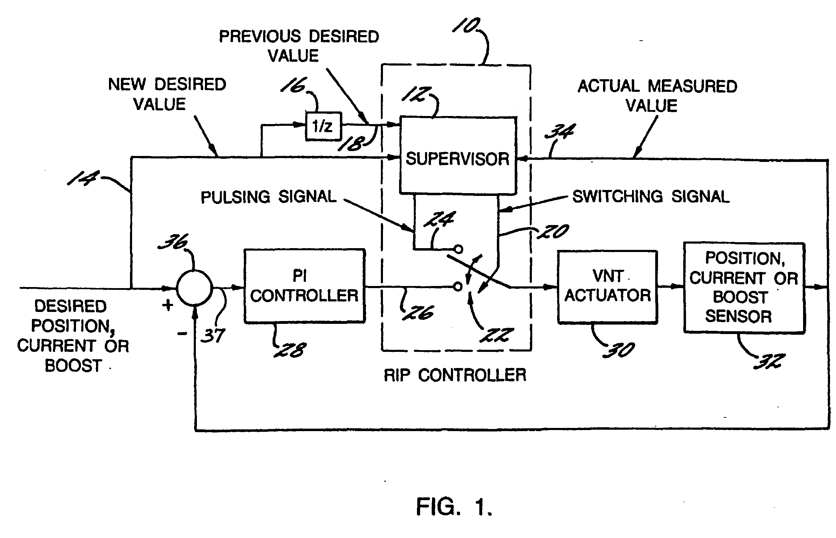

Referring to the drawings, a first embodiment of a control system in accordance with the present invention is shown in FIG. 1. A Rapid Improvement Pulse (RIP) controller **10** incorporates a supervisor logic circuit or arrangement **12** that receives an input **14** from the engine system representing a desired control value. The desired control value is established in various applications as a position of the VGT mechanical system, a desired boost level or an electrical control current. A memory **16** stores the previous desired control value for the previous sample period. The memory in alternative embodiments incorporates a filtering function for conditioning of the stored control value. The previous control value is provided as a second input **18** to the supervisor logic. The input signals are analyzed, as described in greater detail below, and a switch selection signal **20** is provided to a switch **22** for selection of either a pulse control signal **24** or a normal control signal **26** determined by a VGT position controller **28.** The selected control signal is provided to the actuator **30** for adjusting the variable-nozzle vane position. For the closed-loop control system in the embodiment of FIG. 1, a sensor **32** or model-based estimator detects or estimates an actual operating condition of the turbocharger, such as current, variable-geometry member position, or boost, and provides a feedback signal representing the actual measured or estimated value to a third input **34** of the supervisor logic as well as to a feedback summer **36** for the feedback controller, which computes an error signal **37** that is input to the VGT position controller **28.**

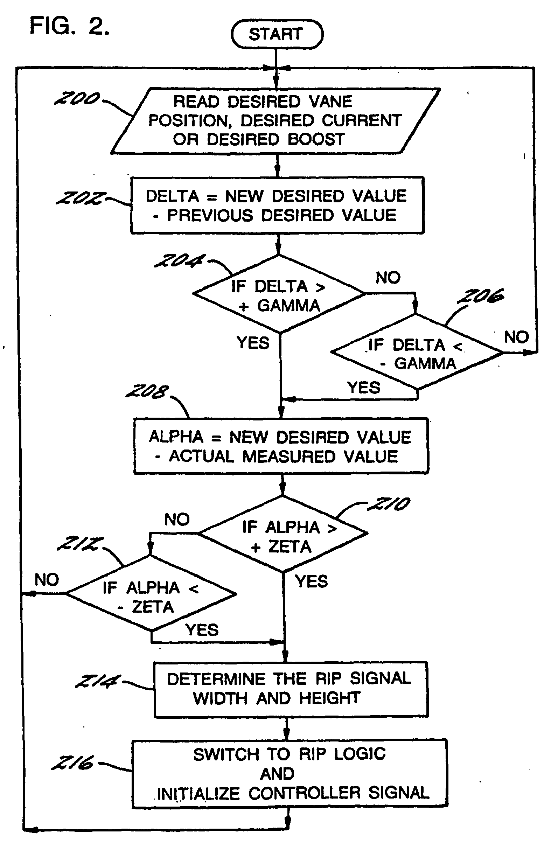

The logic employed in the RIP controller of FIG. 1 is shown in FIG. 2. For each sample period, the supervisor logic **12** reads the desired control value in step **200.** As previously discussed, this value can be a desired variable-geometry member position, desired control current, or a desired boost value depending on the logic and circuitry employed. The supervisor logic in step **202** calculates a first parameter, Delta, as the difference between the new desired control value and the previous desired value (stored in memory **16).** A predetermined threshold value, Gamma (which is a positive number), is compared to Delta in step **204** and if Delta is not greater than +Gamma a determination is made in step **206** whether Delta is less than - Gamma. If either step **204** or step **206** produces an affirmative result, the supervisor logic in step **208** determines a second parameter, Alpha, as the new desired control value minus the actual measured (or estimated) value. In step **210** the supervisor logic tests whether Alpha is greater than +Zeta (a second predetermined threshold); if it is not, then in step **212** the logic tests whether Alpha is less than -Zeta. If either step **210** or step **212** produces an affirmative result, then the supervisor logic determines in step **214** a value for the RIP pulse amplitude and duration (also referred to respectively as the signal height and width). In step **216** the RIP pulse control signal **24** is provided to the switch **22,** which is positioned to provide the pulse signal to the actuator **30.** At the termination of the pulse, or in any sample period in which the first and second parameters, Delta and Alpha, do not exceed the threshold values Gamma and Zeta, respectively, the switch **22** is positioned to the normal controller input **26.** For example, if step **206** results in a negative result (meaning Delta is not less than -Gamma), the logic returns to step **200,** such that in that sample period the control signal supplied by the switch would be the normal control signal **26.** Similarly, if step **212** results in a negative result (meaning Alpha is not less than - Zeta), then the logic returns to step **200.**

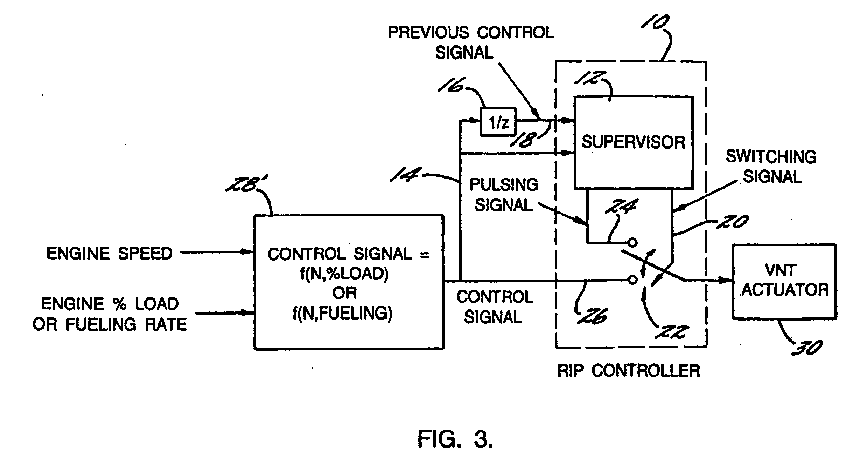

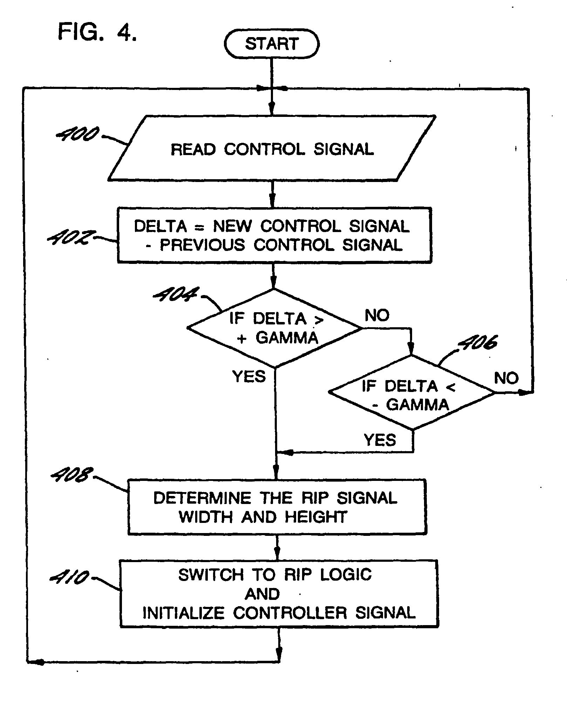

An embodiment of a control system employing the present invention in an open-loop system is shown in FIG. 3. In most open-loop systems, the control input for the turbocharger is defined in terms of a function of engine speed (N) and either percentage of engine load or fuel flow rate as variables in a look-up table or other transfer function generator, represented generally as element **28'.** The elements of the RIP Controller including the supervisor logic **12,** previous control signal memory **16,** and switch **22** operate as previously described in connection with FIG. 1. The logic employed by the open-loop RIP controller is shown in FIG. 4.

For each sample period, the supervisor logic reads the control signal in step **400.** As previously discussed, this value can be a function of engine speed and percent load or fueling rate. The supervisor logic in step **402** calculates a control parameter, Delta, as the difference between the new control signal and the previous control signal. A predetermined threshold value, Gamma, is compared in step **404** and if Delta is not greater than +Gamma a determination is made in step **406** if Delta is less than -Gamma. If either is true, the supervisor logic in step **408** determines a value for the RIP pulse amplitude (or height) and duration (or width). The switch **22** is positioned to the pulse input and the pulse signal is provided to the actuator **30.** At the termination of the pulse, or in any sample period in which the parameter, Delta, does not exceed the threshold value, Gamma, the switch **22** is positioned to the normal control input **26.**

The logic identified in the embodiments shown can be implemented in various computational, hardware or firmware forms with a microprocessor, programmable logic array (PLA), fuzzy logic, neural network, or other discrete logic.

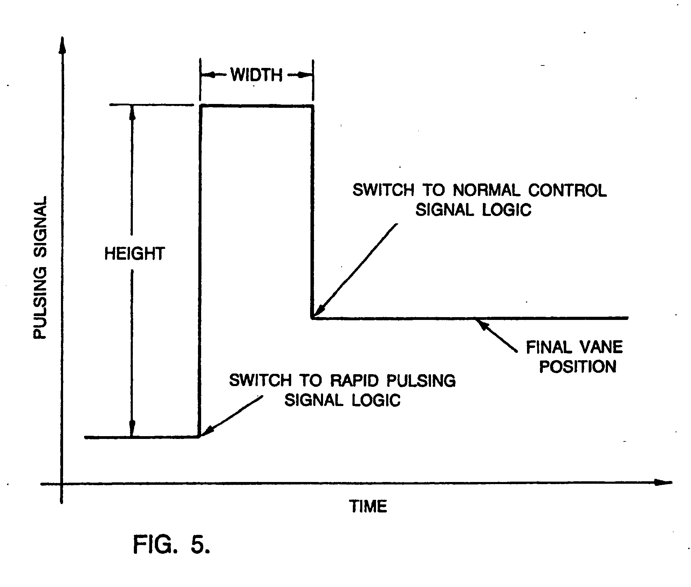

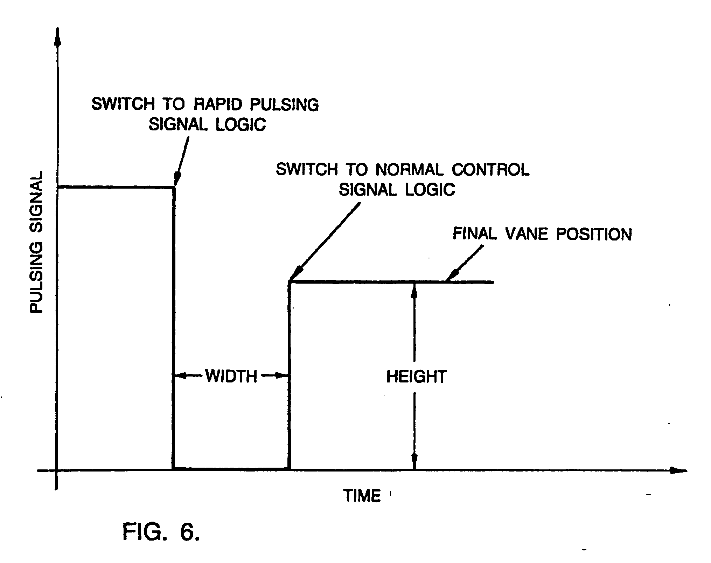

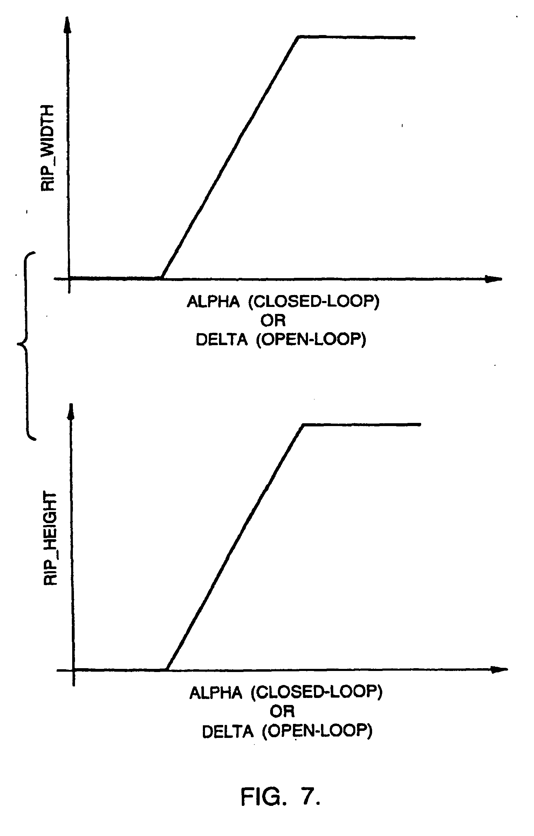

An example of a pulse output provided by the RIP controller is shown in FIG. 5 for a positive pulse resulting from a positive Delta value exceeding the +Gamma threshold. FIG. 6 demonstrates a pulse for a negative Delta value exceeding the - Gamma threshold. The height and width of the pulse in each case are determined in the supervisor logic as a function of the Delta parameter for an open-loop system or the Alpha parameter for a closed-loop system. For example, FIG. 7 shows pulse width and pulse height each as a linear function of either Alpha or Delta (depending on whether the system is closed-loop or open-loop, respectively). Implementation of the pulse generation function in the controller can be effected by a table look-up using tables stored in a memory; alternatively, the pulse generation can be effected by calculating the pulse characteristics based on equations or transfer functions to achieve the desired initiation impulse to the vane control system.

The pulse duration or width can be also determined as a function of the error **37** between the desired and measured or estimated control value as shown in Figure 1.

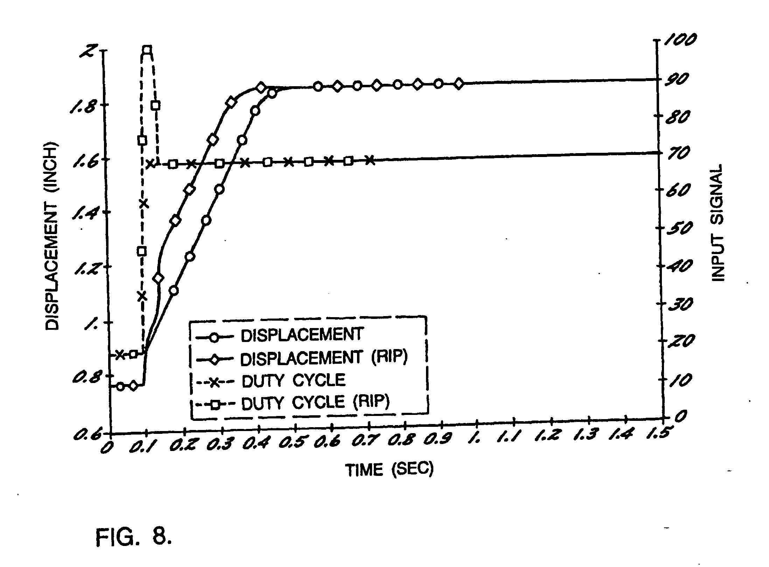

An RIP controller in accordance with the invention was implemented in a turbocharger system generally similar to that shown in the previously referenced U.S. Patent No. 6,269,642. The control system for the turbocharger employed closed-loop control for controlling the position of variable vanes in the turbine inlet nozzle. FIG. 8 shows the improved response in control vane displacement for a full range displacement (fully closed to fully open) with the use of an RIP controller of the present invention as compared to a normal input control. The pulse generated by the RIP controller is designated with "□" symbols while the normal control signal output is designated with "x" symbols. The resulting vane displacement as a function of time is shown on the curve designated with "0" symbols for the RIP pulsed input signal; the curve designated with "o" symbols shows the vane displacement achieved using the normal control input signal. The resulting reduction in the transient response time of the vanes is significant.

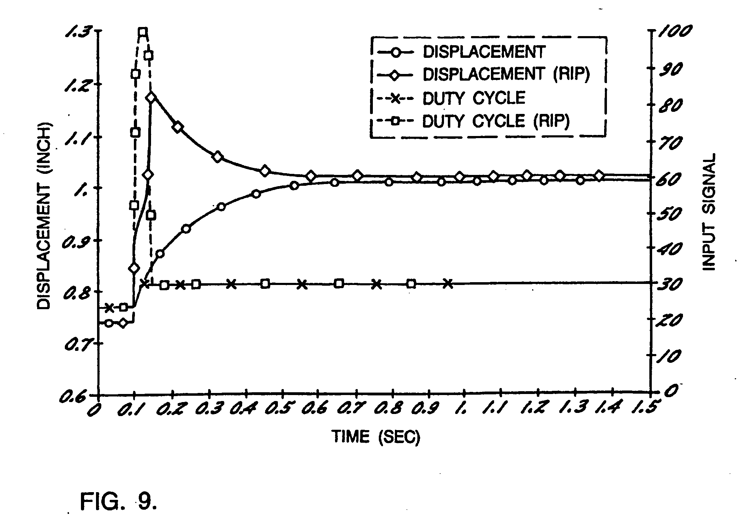

FIG. 9 is a plot of the same type as FIG. 8, but showing the control signals and transient response of the turbocharger vanes for a small range of vane displacement. It will be noted that there is some overshoot in the response of the displacement. The amount of the overshoot can be controlled by selection of the amplitude and duration of the pulsed control signal. Overshoot can be advantageous in that it can speed the response of the boost pressure, which tends to lag with respect to the vane position. Thus, by intentionally overshooting on vane displacement, the boost pressure can be made to more quickly reach the desired level.

The reduction in transient response time is achieved because the RIP pulsed input signal for a short period of time substantially overshoots the level corresponding to the actual desired position of the variable-geometry vanes. As a result, for that short period of time the actuator is caused to move, essentially at its maximum possible speed, toward the position corresponding to the magnitude of the RIP pulsed signal. In this way, the vanes reach the actual desired position sooner than they would if a normal input signal were supplied to the actuator. In the case of a normal control signal, the actuator is caused to move at less than its maximum possible speed and the speed is substantially constant over the entire period of time that it takes for the vanes to reach the desired position.

The inventive control system is applicable to wastegate control systems and other variable geometry configurations in turbocharger applications.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A control system for controlling a variable-geometry mechanism in a turbocharger for an engine, comprising:
a logic arrangement (10) structured and arranged to determine a first difference parameter (DELTA) as the difference between a desired control value (14) representing a desired operating condition in which the turbocharger is to be operated and the previous desired control value (18) and to produce a control signal output based on said first difference parameter, such that the control signal output has a first value (24) when said first difference parameter is greater than a predetermined first threshold (GAMMA) and has a second value (26) different from the first value when said first difference parameter is not greater than the predetermined first threshold, and wherein the logic arrangement is structured and arranged to provide the first value as a pulse of predetermined amplitude and duration, and
**characterised in that** the logic arrangement is further structured and arranged to sample the desired control value and to sample the previous desired control value representing the desired control value determined in a previous sample period,
wherein the amplitude and duration of the pulse is a function of said first difference parameter.

2. The control system of claim 1, wherein the logic arrangement is further structured and arranged to also determine the amplitude and duration of the pulse as a function of ambient conditions.

3. The control system of claim 1, wherein the logic arrangement is structured and arranged to cause the control signal output to have the second value (26) upon expiration of the duration of the pulse.

4. The control system of claim 1, wherein the logic arrangement includes a switch (22) structured and arranged to switch between first and second conditions, the switch in the first condition outputting the control signal output having the first value (24), the switch in the second condition outputting the control signal output having the second value (26), the logic arrangement being structured and arranged to provide a switching signal (20) to the switch for switching between the first and second conditions.

5. The control system of claim 4, wherein the second value (26) for the control signal output comprises a normal control signal, and further comprising a controller (28; 28') structured and arranged to produce the normal control signal for driving the turbocharger from a current operating condition toward the desired operating condition.

6. The control system of claim 5, wherein the controller (28') comprises an open-loop controller.

7. The control system of claim 6, wherein the open-loop controller (28') is structured and arranged to produce the normal control signal (26) as a function of engine speed (N) and degree of loading (% LOAD) on the engine.

8. The control system of claim 6, wherein the open-loop controller (28') is structured and arranged to produce the normal control signal (26) as a function of engine speed (N) and fueling rate (FUELING) of the engine.

9. The control system of claim 5, wherein the controller (28) comprises a closed-loop controller receiving a feedback signal (34) and determining the normal control signal (26) based on the feedback signal.

10. The control system of claim 9, wherein the logic arrangement is structured and arranged to sample an actual control value (34) representing an actual operating condition of the turbocharger and to determine a second difference parameter (ALPHA) as the difference between the desired control value and the actual control value, the logic arrangement producing the control signal output at the first value (24) when either the first difference parameter is greater than the first threshold (GAMMA) or the second difference parameter is greater than a second threshold (ZETA).

11. The control system of claim 10, further comprising a sensor (32) operable to detect the actual operating condition and to produce the actual control value (34) and supply the actual control value to the logic arrangement (10).

12. The control system of claim 1, further comprising a memory (16) structured and arranged to store the previous desired control value (18) and to supply the previous desired control value to the logic arrangement (10).

13. The control system of claim 12, wherein the memory (16) is structured and arranged to filter the stored previous desired control value (18).

14. The control system of claim 1, further comprising an actuator (30) operable to adjust the variable-geometry mechanism, the actuator being arranged to receive the control signal (24; 26) output from the logic arrangement (16).

15. The control system of claim 1, wherein the logic arrangement comprises a logic circuit (10) having a first input, a second input, and an output (20), the logic circuit being structured and arranged to calculate the first difference parameter (DELTA) as the difference between the first and second inputs and to selectively provide either a first value or a second value to the output depending on the value of said difference, the logic circuit being further structured and arranged to produce the pulse control signal output (24);
the control system further comprising:
means for providing the desired control signal (14) to the first input;
means for providing the previous control signal (18) to the second input;
a controller (28; 28') structured and arranged to provide a normal control signal (26);
a switch (22) receiving the normal control signal and the pulse control signal output and having a switch output, the switch being responsive to the logic circuit output and providing the pulse control signal output to the switch output responsive to the first value on the logic circuit output and providing the normal control signal to the switch output responsive to the second value on the logic circuit output; and
an actuator (30) connected to the switch output, the actuator operable to adjust the variable-geometry mechanism of the turbocharger.

16. A method for controlling a variable-geometry mechanism in a turbocharger for an engine, comprising the steps of:
sampling (200; 400) a desired control value (14) representing a desired operating condition in which the turbocharger is to be operated;
sampling a previous desired control value (18) representing the desired control value determined in a previous sample period;
determining (202; 402) a first difference parameter (DELTA) as the difference between the desired control value and the previous desired control value; and
supplying a control signal output to an actuator for the variable-geometry mechanism based on said first difference parameter, such that the control signal output has a first value (24) when said first difference parameter is greater than a predetermined first threshold (GAMMA) and has a second value (26) different from the first value when said first difference parameter is not greater than the predetermined first threshold, said first value being supplied in the form of a pulse of predetermined amplitude and duration, the amplitude and duration of the pulse being a function of said first difference parameter.

17. The method of claim 16, wherein the amplitude and duration of the pulse are also functions of ambient conditions.

18. The method of claim 16, further comprising the step of causing the control signal output to have the second value (26) upon expiration of the duration of the pulse.

19. The method of claim 16, wherein the second value (26) is determined as a function of engine speed (N) and degree of loading (% LOAD) on the engine.

20. The method of claim 16, wherein the second value (26) is determined as a function of engine speed (N) and fueling rate (FUELING) of the engine.

21. The method of claim 16, wherein the second value (26) is determined based on a feedback signal (34).

22. The method of claim 16, further comprising the steps of:
sampling an actual control value (34) representing an actual operating condition of the turbocharger;
determining a second difference parameter (ALPHA) as the difference between the desired control value (14) and the actual control value; and
producing the control signal output at the first value (24) when either the first difference parameter (DELTA) is greater than the first threshold (GAMMA) or the second difference parameter is greater than a second threshold (ZETA).

23. The method of claim 16, further comprising the step of storing the previous desired control value (18) in a memory (16).

24. The method of claim 23, further comprising the step of filtering the stored previous desired control value (18).

## Patentansprüche

1. Steuersystem zur Steuerung eines Mechanismus variabler Geometrie in einem Turbolader für einen Motor, umfassend:
eine Logikanordnung (10), die so strukturiert und angeordnet ist, dass sie einen ersten Differenzparameter (DELTA) als die Differenz zwischen einem gewünschten Steuerwert (14), der einen gewünschten Betriebszustand, in dem der Turbolader zu betreiben ist, repräsentiert, und dem vorherigen gewünschten Steuerwert (18) bestimmt und auf der Basis des ersten Differenzparameters eine Steuersignalausgabe produziert, dergestalt, dass die Steuersignalausgabe einen erste Wert (24) aufweist, wenn der erste Differenzparameter größer als eine vorbestimmte erste Schwelle (GAMMA) ist, und einen von dem ersten Wert verschiedenen zweiten Wert (26) aufweist, wenn der erste Differenzparameter nicht größer als die vorbestimmte erste Schwelle ist, und wobei die Logikanordnung so strukturiert und angeordnet ist, dass sie den ersten Wert als einen Impuls vorbestimmter Amplitude und Dauer bereitstellt, und
**dadurch gekennzeichnet, dass** die Logikanordnung ferner so strukturiert und angeordnet ist, dass sie den gewünschten Steuerwert abtastet und den vorherigen gewünschten Steuerwert abtastet, der den in einer vorherigen Abtastperiode bestimmten gewünschten Steuerwert repräsentiert,
wobei die Amplitude und Dauer des Impulses eine Funktion des ersten Differenzparameters sind.

2. Steuersystem nach Anspruch 1, wobei die Logikanordnung ferner so strukturiert und angeordnet ist, dass sie auch die Amplitude und Dauer des Impulses als Funktion von Umgebungsbedingungen bestimmt.

3. Steuersystem nach Anspruch 1, wobei die Logikanordnung so strukturiert und angeordnet ist, dass sie bewirkt, dass die Steuersignalausgabe beim Ablaufen der Dauer des Impulses den zweiten Wert (26) aufweist.

4. Steuersystem nach Anspruch 1, wobei die Logikanordnung einen Schalter (22) enthält, der so strukturiert und angeordnet ist, dass er zwischen einem ersten und einem zweiten Zustand umschaltet, wobei der Schalter im ersten Zustand die Steuersignalausgabe mit dem ersten Wert (24) ausgibt, der Schalter im zweiten Zustand die Steuersignalausgabe mit dem zweiten Wert (26) ausgibt, die Logikanordnung so strukturiert und angeordnet ist, dass sie dem Schalter ein Umschaltsignal (20) zum Umschalten zwischen dem ersten und zweiten Zustand zuführt.

5. Steuersystem nach Anspruch 4, wobei der zweite Wert (26) für die Steuersignalausgabe ein normales Steuersignal umfasst, und ferner mit einer Steuerung (28; 28'), die so strukturiert und angeordnet ist, dass sie das normale Steuersignal zum Steuern des Turboladers von einem aktuellen Betriebszustand in Richtung des gewünschten Betriebszustands produziert.

6. Steuersystem nach Anspruch 5, wobei die Steuerung (28') eine Steuerung mit offener Schleife umfasst.

7. Steuersystem nach Anspruch 6, wobei die Steuerung mit offener Schleife (28') so strukturiert und angeordnet ist, dass sie das normale Steuersignal (26) als Funktion von Motordrehzahl (N) und Grad der Belastung (% LOAD) des Motors produziert.

8. Steuersystem nach Anspruch 6, wobei die Steuerung mit offener Schleife (28') so strukturiert und angeordnet ist, dass sie das normale Steuersignal (26) als Funktion der Motordrehzahl (N) und der Kraftstoffzuführungsrate (FUELING) des Motors produziert.

9. Steuersystem nach Anspruch 5, wobei die Steuerung (28) eine Steuerung mit geschlossener Schleife umfasst, die ein Rückkopplungssignal (34) empfängt und auf der Basis des Rückkopplungssignals das normale Steuersignal (26) bestimmt.

10. Steuersystem nach Anspruch 9, wobei die Logikanordnung so strukturiert und angeordnet ist, dass sie einen tatsächlichen Steuerwert (34) abtastet, der einen aktuellen Betriebszustand des Turboladers repräsentiert, und einen zweiten Differenzparameter (ALPHA) als die Differenz zwischen dem gewünschten Steuerwert und dem tatsächlichen Steuerwert bestimmt, wobei die Logikanordnung die Steuersignalausgabe auf dem ersten Wert (24) produziert, wenn entweder der erste Differenzparameter größer als die erste Schwelle (GAMMA) oder der zweite Differenzparameter größer als die zweite Schwelle (ZETA) ist.

11. Steuersystem nach Anspruch 10, ferner mit einem Sensor (32), der betreibbar ist, um den tatsächlichen Betriebszustand zu detektieren und um den tatsächlichen Steuerwert (34) zu produzieren und der Logikanordnung (10) den tatsächlichen Steuerwert zuzuführen.

12. Steuersystem nach Anspruch 1, ferner mit einem Speicher (16), der so strukturiert und angeordnet ist, dass er den vorherigen gewünschten Steuerwert (18) speichert und den vorherigen gewünschten Steuerwert der Logikanordnung (10) zuführt.

13. Steuersystem nach Anspruch 12, wobei der Speicher (16) so strukturiert und angeordnet ist, dass er den gespeicherten vorherigen gewünschten Steuerwert (18) filtert.

14. Steuersystem nach Anspruch 1, ferner mit einem Aktor (30), der betreibbar ist, um den Mechanismus variabler Geometrie zu justieren, wobei der Aktor dafür ausgelegt ist, das aus der Logikanordnung (16) ausgegebene Steuersignal (24; 26) zu empfangen.

15. Steuersystem nach Anspruch 1, wobei die Logikanordnung eine Logikschaltung (10) mit einem ersten Eingang, einem zweiten Eingang und einem Ausgang (20) umfasst, wobei die Logikschaltung so strukturiert und angeordnet ist, dass sie den ersten Differenzparameter (DELTA) als die Differenz zwischen dem ersten und zweiten Eingang berechnet und abhängig von dem Wert der Differenz dem Ausgang selektiv entweder einen ersten Wert oder einen zweiten Wert zuführt, wobei die Logikschaltung ferner so strukturiert und angeordnet ist, dass sie die Impulssteuersignalausgabe (24) produziert;
wobei das Steuersystem ferner Folgendes umfasst:
ein Mittel, das dem ersten Eingang das gewünschte Steuersignal (14) zuführt;
ein Mittel, das dem zweiten Eingang das vorherige Steuersignal (18) zuführt;
eine Steuerung (28; 28'), die so strukturiert und angeordnet ist, dass sie ein normales Steuersignal (26) bereitstellt;
einen Schalter (22), der das normale Steuersignal und die Impulssteuersignalausgabe empfängt und einen Schalterausgang aufweist, wobei der Schalter auf die Logikschaltungsausgabe reagiert und als Reaktion auf den ersten Wert an den Logikschaltungsausgang dem Schalterausgang die Impulssteuersignalausgabe zuführt und als Reaktion auf den zweiten Wert an dem Logikschaltungsausgang den Schalterausgang das normale Steuersignal zuführt; und
einen mit dem Schalterausgang verbundenen Aktor (30), wobei der Aktor betreibbar ist, um den Mechanismus variabler Geometrie des Turboladers zu justieren.

16. Verfahren zum Steuern eines Mechanismus variabler Geometrie in einem Turbolader für einen Motor, mit den folgenden Schritten:
Abtasten (200; 400) eines gewünschten Steuerwerts (14), der einen gewünschten Betriebszustand repräsentiert, in dem der Turbolader zu betreiben ist;
Abtasten eines vorherigen gewünschten Steuerwerts (18), der den in einer vorherigen Abtastperiode bestimmten gewünschten Steuerwert repräsentiert;
Bestimmen (202; 402) eines ersten Differenzparameters (DELTA) als die Differenz zwischen dem gewünschten Steuerwert und dem vorherigen gewünschten Steuerwert; und
Leiten einer Steuersignalausgabe zu einem Aktor für den Mechanismus variabler Geometrie auf der Basis des ersten Differenzparameters dergestalt, dass die Steuersignalausgabe einen ersten Wert (24) aufweist, wenn der erste Differenzparameter größer als eine vorbestimmte erste Schwelle (GAMMA) ist und einen von dem ersten Wert verschiedenen zweiten Wert (26) aufweist, wenn der erste Differenzparameter nicht größer als die vorbestimmte erste Schwelle ist, wobei der erste Wert in Form eines Impulses vorbestimmter Amplitude und Dauer zugeführt wird, wobei die Amplitude und Dauer des Impulses eine Funktion des ersten Differenzparameters sind.

17. Verfahren nach Anspruch 16, wobei die Amplitude und Dauer des Impulses auch Funktionen von Umgebungsbedingungen sind.

18. Verfahren nach Anspruch 16, ferner mit dem Schritt des Bewirkens, dass die Steuersignalausgabe beim Ablaufen der Dauer des Impulses den zweiten Wert (26) aufweist.

19. Verfahren nach Anspruch 16, wobei der zweite Wert (26) als Funktion der Motordrehzahl (N) und des Grads der Belastung (% LOAD) an dem Motor bestimmt wird.

20. Verfahren nach Anspruch 16, wobei der zweite Wert (26) als Funktion der Motordrehzahl (N) und der Kraftstoffzuführungsrate (FUELING) des Motors bestimmt wird.

21. Verfahren nach Anspruch 16, wobei der zweite Wert (26) auf der Basis eines Rückkopplungssignals (34) bestimmt wird.

22. Verfahren nach Anspruch 16, ferner mit den folgenden Schritten:
Abtasten eines tatsächlichen Steuerwerts (34), der einen tatsächlichen Betriebszustand des Turboladers repräsentiert;
Bestimmen eines zweiten Differenzparameters (ALPHA) als die Differenz zwischen dem gewünschten Steuerwert (14) und dem tatsächlichen Steuerwert; und
Produzieren der Steuersignalausgabe mit dem ersten Wert (24), wenn entweder der erste Differenzparameter (DELTA) größer als die erste Schwelle (GAMMA) oder der zweite Differenzparameter größer als eine zweite Schwelle (ZETA) ist.

23. Verfahren nach Anspruch 16, ferner mit dem Schritt des Speicherns des vorherigen gewünschten Steuerwerts (18) in einem Speicher (16).

24. Verfahren nach Anspruch 23, ferner mit dem Schritt des Filterns des gespeicherten vorherigen gewünschten Steuerwerts (18).

## Revendications

1. Système de commande pour commander un mécanisme à géométrie variable dans un turbocompresseur de moteur, comprenant :
un agencement logique (10) structuré et agencé pour déterminer un premier paramètre de différence (DELTA) en tant que différence entre une valeur de commande souhaitée (14) représentant un état opérationnel souhaité dans lequel le turbocompresseur est actionné et la valeur de commande souhaitée antérieure (18) et produire une sortie de signal de commande en fonction dudit premier paramètre de différence, de telle sorte que la sortie de signal de commande ait une première valeur (24) quand ledit premier paramètre de différence est supérieur à un premier seuil prédéterminé (GAMMA) et ait une seconde valeur (26) différente de la première valeur quand ledit premier paramètre de différence n'est pas supérieur au premier seuil prédéterminé, et dans lequel l'agencement logique est structuré et agencé pour produire la première valeur sous forme d'impulsion d'une amplitude et d'une durée prédéterminées, et
**caractérisé en ce que** l'agencement logique est en outre structuré et agencé pour échantillonner la valeur de commande souhaitée et échantillonner la valeur de commande souhaitée antérieure représentant la valeur de commande souhaitée déterminée dans une période d'échantillonnage souhaitée,
dans lequel l'amplitude et la durée de l'impulsion sont fonction dudit premier paramètre de différence.

2. Système de commande selon la revendication 1, dans lequel l'agencement logique est en outre structuré et agencé pour déterminer également l'amplitude et la durée de l'impulsion en fonction des conditions ambiantes.

3. Système de commande selon la revendication 1, dans lequel l'agencement logique est structuré et agencé pour faire en sorte que la sortie de signal de commande ait la seconde valeur (26) à l'expiration de la durée de l'impulsion.

4. Système de commande selon la revendication 1, dans lequel l'agencement logique comporte un commutateur (22) structuré et agencé pour commuter entre des premier et second états, le commutateur dans le premier état produisant en sortie la sortie de signal de commande ayant la première valeur (24), le commutateur dans le second état produisant en sortie la sortie de commande de signal ayant la seconde valeur (26), l'agencement logique étant structuré et agencé pour fournir un signal de commutation (20) au commutateur afin de commuter entre les premier et second états.

5. Système de commande selon la revendication 4, dans lequel la seconde valeur (26) de la sortie de signal de commande comprend un signal de commande normal, et comprenant en outre une unité de commande (28 ; 28') structurée et agencée pour produire le signal de commande normal servant à entraîner le turbocompresseur d'un état opérationnel courant vers l'état opérationnel souhaité.

6. Système de commande selon la revendication 5, dans lequel l'unité de commande (28') comprend une unité de commande à boucle ouverte.

7. Système de commande selon la revendication 6, dans lequel l'unité de commande à boucle ouverte (28') est structurée et agencée pour produire le signal de commande normal (26) en fonction de la vitesse du moteur (N) et du degré de charge (%CHARGE) du moteur.

8. Système de commande selon la revendication 6, dans lequel l'unité de commande à boucle ouverte (28') est structurée et agencée pour produire le signal de commande normal (26) en fonction de la vitesse du moteur (N) et du débit de carburation (CARBURATION) du moteur.

9. Système de commande selon la revendication 5, dans lequel l'unité de commande (28) comprend une unité de commande à boucle fermée recevant un signal de contre-réaction (34) et déterminant le signal de commande normal (26) en fonction du signal de contre-réaction.

10. Système de commande selon la revendication 9, dans lequel l'agencement logique est structuré et agencé pour échantillonner une valeur de commande effective (34) représentant un état opérationnel effectif du turbocompresseur et déterminer un second paramètre de différence (ALPHA) comme la différence entre la valeur de commande souhaitée et la valeur de commande effective, l'agencement logique produisant la sortie de signal de commande à la première valeur (24) quand le premier paramètre de différence est supérieur au premier seuil (GAMMA) ou quand le second paramètre de différence est supérieur à un second seuil (ZETA).

11. Système de commande selon la revendication 10, comprenant en outre un capteur (32) actionnable pour détecter l'état opérationnel réel et produire la valeur de commande effective (34) et fournir la valeur de commande effective à l'agencement logique (10).

12. Système de commande selon la revendication 1, comprenant en outre une mémoire (16) structurée et agencée pour stocker la valeur de commande souhaitée antérieure (18) et fournir la valeur de commande souhaitée antérieure à l'agencement logique (10).

13. Système de commande selon la revendication 12, dans lequel la mémoire (16) est structurée et agencée pour filtrer la valeur de commande souhaitée antérieure stockée (18).

14. Système de commande selon la revendication 1, comprenant en outre un actionneur (30) exploitable pour régler le mécanisme à géométrie variable, l'actionneur étant agencé pour recevoir le signal de commande (24 ; 26) produit en sortie par l'agencement logique (16).

15. Système de commande selon la revendication 1, dans lequel l'agencement logique comprend un circuit logique (10) ayant une première entrée, une seconde entrée et une sortie (20), le circuit logique étant structuré et agencé pour calculer le premier paramètre de différence (DELTA) en tant que différence entre les première et seconde entrées et produire sélectivement une première valeur ou une seconde valeur à la sortie en fonction de la valeur de ladite différence, le circuit logique étant structuré et agencé pour produire la sortie de signal de commande impulsionnelle (24) ;
le système de commande comprenant en outre :
un moyen pour fournir le signal de commande souhaité (14) à la première entrée ;
un moyen pour fournir le signal de commande antérieur (18) à la seconde entrée ;
une unité de commande (28 ; 28') structurée et agencée pour produire un signal de commande normal (26);
un commutateur (22) recevant le signal de commande normal et la sortie de signal de commande impulsionnelle et ayant une sortie de commutation, le commutateur étant sensible à la sortie du circuit logique et fournissant la sortie de signal de commande impulsionnelle à la sortie du commutateur en réponse à la première valeur sur la sortie du circuit logique et fournissant le signal de commande normal à la sortie du commutateur en réponse à la seconde valeur sur la sortie du circuit logique ; et
un actionneur (30) connecté à la sortie du commutateur, l'actionneur étant exploitable pour régler le mécanisme à géométrie variable du turbocompresseur.

16. Procédé de commande d'un mécanisme à géométrie variable dans un turbocompresseur de moteur, comprenant les étapes suivantes :
échantillonnage (200 ; 400) d'une valeur de commande souhaitée (14) représentant un état opérationnel souhaité dans lequel le turbocompresseur doit être actionné ;
échantillonnage d'une valeur de commande souhaitée antérieure (18) représentant la valeur de commande souhaitée déterminée dans une période d'échantillonnage antérieure ;
détermination (202 ; 402) d'un premier paramètre de différence (DELTA) en tant que différence entre la valeur de commande souhaitée et la valeur de commande souhaitée antérieure ; et
fourniture d'une sortie de signal de commande à un actionneur du mécanisme à géométrie variable en fonction dudit premier paramètre de différence, de telle sorte que la sortie de signal de commande ait une première valeur (24) quand ledit premier paramètre de différence est supérieur à un premier seuil prédéterminé (GAMMA) et ait une seconde valeur (26) différente de la première valeur quand ledit premier paramètre de différence n'est pas supérieur au premier seuil prédéterminé, ladite première valeur étant fournie sous forme d'impulsion d'une amplitude et d'une durée prédéterminées, l'amplitude et la durée de l'impulsion étant fonction dudit premier paramètre de différence.

17. Procédé selon la revendication 16, dans lequel l'amplitude et la durée de l'impulsion sont également fonction des conditions ambiantes.

18. Procédé selon la revendication 16, comprenant en outre l'étape consistant à faire en sorte que la sortie de signal de commande ait la seconde valeur (26) à l'expiration de la durée de l'impulsion.

19. Procédé selon la revendication 16, dans lequel la seconde valeur (26) est déterminée en fonction de la vitesse du moteur (N) et du degré de charge (%CHARGE) du moteur.

20. Procédé selon la revendication 16, dans lequel la seconde valeur (26) est déterminée en fonction de la vitesse du moteur (N) et du débit de carburation (CARBURATION) du moteur.

21. Procédé selon la revendication 16, dans lequel la seconde valeur (26) est déterminée en fonction d'un signal de contre-réaction (34).

22. Procédé selon la revendication 16, comprenant en outre les étapes suivantes :
échantillonnage d'une valeur de commande effective (34) représentant un état opérationnel effectif du turbocompresseur ;
détermination d'un second paramètre de différence (ALPHA) comme la différence entre la valeur de commande souhaitée (14) et la valeur de commande effective ; et
production de la sortie de signal de commande à la première valeur (24) quand le premier paramètre de différence (DELTA) est supérieur au premier seuil (GAMMA) ou quand le second paramètre de différence est supérieur à un second seuil (ZETA).

23. Procédé selon la revendication 16, comprenant en outre l'étape de stockage de la valeur de commande souhaitée antérieure (18) dans une mémoire (16).

24. Procédé selon la revendication 23, comprenant en outre l'étape de filtrage de la valeur de commande souhaitée antérieure stockée (18).
